(19) Europäisches Patentamt
European Patent Office
Office européen des brevets

(11) EP 2 925 538 B1

(12) # FASCICULE DE BREVET EUROPEEN

(45) Date de publication et mention de la délivrance du brevet:
**19.10.2016 Bulletin 2016/42**

(21) Numéro de dépôt: **13795261.0**

(22) Date de dépôt: **25.11.2013**

(51) Int Cl.:
***B60C 1/00*** (2006.01) ***C08J 9/08*** (2006.01)
***C08K 3/00*** (2006.01) ***C08K 3/04*** (2006.01)
***C08K 3/26*** (2006.01) ***C08L 7/00*** (2006.01)
***C08L 9/00*** (2006.01)

(86) Numéro de dépôt international:
**PCT/EP2013/074622**

(87) Numéro de publication internationale:
**WO 2014/082964 (05.06.2014 Gazette 2014/23)**

(54) **PNEUMATIQUE POUR VÉHICULE DONT LA BANDE DE ROULEMENT COMPORTE UNE COMPOSITION DE CAOUTCHOUC THERMO-EXPANSIBLE**

FAHRZEUGREIFEN MIT EINER LAUFFLÄCHE MIT EINER WÄRMEEXPANDIERBAREN KAUTSCHUKZUSAMMENSETZUNG

VEHICLE TYRE, THE TREAD OF WHICH COMPRISES A HEAT-EXPANDABLE RUBBER COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.11.2012 FR 1261396**

(43) Date de publication de la demande:
**07.10.2015 Bulletin 2015/41**

(73) Titulaires:
- **Compagnie Générale des Etablissements Michelin
63000 Clermont-Ferrand (FR)**
- **MICHELIN Recherche et Technique S.A.
1763 Granges-Paccot (CH)**

(72) Inventeurs:
- **OCHIAI, Chika
Tokyo 163-1073 (JP)**
- **PAGANO, Salvatore
F-63040 Clermont-Ferrand Cedex 9 (FR)**

(74) Mandataire: **Ribière, Joel
Manufacture Française des Pneumatiques Michelin
23, place des Carmes-Déchaux
DGD/PI - F35 - Ladoux
63040 Clermont-Ferrand Cedex (FR)**

(56) Documents cités:
**EP-A1- 0 599 643**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 925 538 B1

## Description

### **1**. DOMAINE DE L'INVENTION

L'invention est relative aux compositions caoutchouteuses utilisées comme bandes de roulement de pneumatiques pour véhicules, en particulier de pneumatiques « hiver » aptes à rouler sur des sols recouverts de glace ou verglas sans être pourvus de clous (aussi appelés pneumatiques *"studless"*).

Elle est plus particulièrement relative aux bandes de roulement de pneumatiques hiver spécifiquement adaptées à un roulage sous des conditions dites de "glace fondante" rencontrées dans un domaine de températures typiquement comprises entre -5°C et 0°C. On rappelle en effet que, dans un tel domaine, la pression des pneumatiques au passage du véhicule provoque une fusion superficielle de la glace qui se recouvre d'un mince film d'eau nuisible à l'adhérence de ces pneumatiques.

### **2.** ETAT DE LA TECHNIQUE

Pour éviter les effets néfastes des clous, notamment leur forte action abrasive sur le revêtement du sol lui-même et un comportement routier notablement dégradé sur sol sec, les manufacturiers de pneumatiques ont proposé différentes solutions consistant à modifier la formulation des compositions de caoutchouc elles-mêmes.

Ainsi, il a été proposé tout d'abord d'incorporer des particules solides à grande dureté, telle que par exemple du carbure de silicium (voir par exemple US 3 878 147), dont certaines viennent affleurer la surface de la bande de roulement au fur et à mesure de l'usure de cette dernière, et entrent donc en contact avec la glace. De telles particules, aptes à agir en défmitive comme des micro-clous sur de la glace dure, grâce à un effet de "griffe" bien connu, restent relativement agressives vis-à-vis du sol ; elles ne sont pas bien adaptées aux conditions de roulage sur une glace fondante.

D'autres solutions ont donc été proposées, consistant notamment à incorporer des poudres hydrosolubles dans la composition constitutive de la bande de roulement. De telles poudres se solubilisent plus ou moins au contact de la neige ou de la glace fondue, ce qui permet d'une part la création à la surface de la bande de roulement de porosités susceptibles d'améliorer l'accrochage de la bande de roulement sur le sol et d'autre part la création de gorges jouant le rôle de canaux d'évacuation du film liquide créé entre le pneumatique et le sol. A titre d'exemples de telles poudres hydrosolubles, on peut citer par exemple l'emploi de poudre de cellulose, d'alcool vinylique ou d'amidon, ou encore des poudres de gomme de guar ou de gomme de xanthane (voir par exemple demandes de brevet JP 3-159803, JP 2002-211203, EP 940 435, WO 2008/080750, WO 2008/080751).

Il a également été proposé d'utiliser des particules de poudre qui ne sont ni à haute dureté ni hydrosolubles, aptes malgré tout à générer une microrugosité de surface efficace (voir en particulier demandes de brevet WO 2009/083125 et WO 2009/112220).

Enfin, pour améliorer les performances d'adhérence sur glace d'une bande de roulement, il est également bien connu d'utiliser une couche de caoutchouc mousse à base d'élastomère diénique, d'un agent d'expansion *("blowing agent")* et divers autres additifs tels que notamment un activateur d'expansion. Ces agents d'expansion, tels que par exemple des composés nitro, sulfonyl ou azo, sont aptes à libérer lors d'une activation thermique, par exemple lors de la vulcanisation du pneumatique, une quantité de gaz importante, notamment de l'azote, et ainsi conduire à la formation de bulles au sein d'un matériau suffisamment mou tel qu'une composition de caoutchouc comportant de tels agents d'expansion. De telles formulations de caoutchouc mousse pour pneumatiques hiver ont été décrites par exemple dans les documents brevet JP 2003-183434, JP 2004-091747, JP 2006-299031, JP 2007-039499, JP 2007-314683, JP2008-001826, JP 2008-150413, EP 826 522, US 5 147 477, US 6336487.

### 3. BREVE DESCRIPTION DE L'INVENTION

Au cours de leurs recherches sur la technologie ci-dessus relative à l'utilisation de caoutchouc mousse, les Demanderesses ont découvert une formulation spécifique à base d'un taux élevé d'un agent d'expansion et d'un activateur spécifiques combinés, qui permet d'améliorer fortement l'adhérence sur glace fondante des bandes de roulement.

En conséquence, la présente invention concerne un pneumatique à l'état non vulcanisé dont la bande de roulement comporte une composition de caoutchouc thermo-expansible comportant au moins un élastomère diénique, plus de 50 pce d'une charge renforçante, entre 5 et 25 pce d'un carbonate ou hydrogénocarbonate de sodium ou potassium et entre 2 et 20 pce d'un sel acide, la teneur totale en (hydrogéno)carbonate et sel acide étant supérieure à 10 pce, le sel acide étant :

- soit un sel acide de polyacide inorganique, l'anion du sel acide étant choisi dans le groupe constitué par les hydrogénosulfates, hydrogénosulfures, hydrogénosulfites, hydrogénophosphates et dihydrogénophosphates ;

- soit un sel acide de polyacide organique, l'anion du sel acide étant un monocarboxylate de diacide ou triacide carboxylique, ou un dicarboxylate de triacide carboxylique.

Les pneumatiques de l'invention, une fois vulcanisés, sont particulièrement destinés à équiper des véhicules à moteur de type tourisme, incluant les véhicules 4x4 (à quatre roues motrices) et véhicules SUV (*"Sport Utility Vehicles"*), des véhicules deux roues (notamment motos) comme des véhicules industriels choisis en particulier parmi camionnettes et "poids-lourd" (e.g. métro, bus, engins de transport routier tels que camions, tracteurs).

L'invention ainsi que ses avantages seront aisément compris à la lumière de la description et des exemples de réalisation qui suivent.

## **4.** DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Le pneumatique de l'invention a donc pour caractéristique essentielle que sa bande de roulement à l'état non vulcanisé, tout au moins pour sa portion (patrie radialement la plus externe) destinée à entrer directement en contact avec la surface de la route, comporte une composition de caoutchouc thermo-expansible comportant au moins :

- un (au moins un, c'est-à-dire un ou plusieurs) élastomère diénique ;
- plus de 50 pce d'une (au moins une, c'est-à-dire une ou plusieurs) charge renforçante ;
- entre 5 et 25 pce d'un (au moins un, c'est-à-dire un ou plusieurs) carbonate ou hydrogénocarbonate de sodium, ou carbonate ou hydrogénocarbonate de potassium ;
- entre 2 et 20 pce d'un (au moins un, c'est-à-dire un ou plusieurs) sel acide ;
- la teneur totale en (hydrogéno)carbonate et sel acide étant supérieure à 10 pce,

le sel acide étant :

- soit un sel acide de polyacide inorganique, l'anion du sel acide étant choisi dans le groupe constitué par les hydrogénosulfates, hydrogénosulfures, hydrogénosulfites, hydrogénophosphates et dihydrogénophosphates ;
- soit un sel acide de polyacide organique, l'anion du sel acide étant un monocarboxylate de diacide ou triacide carboxylique, ou un dicarboxylate de triacide carboxylique.

Les différents composants ci-dessus sont décrits en détail ci-après.

### 4.1. Elastomère diénique

Par élastomère (ou caoutchouc, les deux termes étant synonymes) du type "diénique", on rappelle que doit être entendu un élastomère issu au moins en partie (i.e. un homopolymère ou un copolymère) de monomères diènes (monomères porteurs de deux doubles liaisons carbone-carbone, conjuguées ou non).

Les élastomères diéniques peuvent être classés de manière connue en deux catégories : ceux dits "essentiellement insaturés" et ceux dits "essentiellement saturés". Les caoutchoucs butyl, ainsi que par exemple les copolymères de diènes et d'alpha-oléfines type EPDM, entrent dans la catégorie des élastomères diéniques essentiellement saturés, ayant un taux de motifs d'origine diénique qui est faible ou très faible, toujours inférieur à 15% (% en moles). A contrario, par élastomère diénique essentiellement insaturé, on entend un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

On préfère utiliser au moins un élastomère diénique du type fortement insaturé, en particulier un élastomère diénique choisi dans le groupe constitué par le caoutchouc naturel (NR), les polyisoprènes de synthèse (IR), les polybutadiènes (BR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans US 6 013 718), des groupes alkoxysilanes (tels que décrits par exemple dans US 5 977 238), des groupes carboxyliques (tels que décrits par exemple dans US 6 815 473 ou US 2006/0089445) ou encore des groupes polyéthers (tels que décrits par exemple dans US 6 503 973). A titre d'autres exemples de tels élastomères fonctionnalisés, on peut citer également des élastomères (tels que SBR, BR, NR ou IR) du type époxydés.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse ("Tg" - mesurée selon ASTM D3418-82) de -40°C à -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

Selon un mode de réalisation particulièrement préférentiel de l'invention, l'élastomère diénique est choisi dans le groupe constitué par le caoutchouc naturel, les polyisoprènes de synthèse, les polybutadiènes ayant un taux de liaisons cis-1,4 supérieur à 90%, les copolymères de butadiène-styrène et les mélanges de ces élastomères.

Selon un mode de réalisation plus particulier et préférentiel, la composition de caoutchouc thermo-expansible comporte 50 à 100 pce de caoutchouc naturel ou de polyisoprène de synthèse, ledit caoutchouc naturel ou polyisoprène de synthèse pouvant être utilisé notamment en coupage (mélange) avec au plus 50 pce d'un polybutadiène ayant un taux de liaisons cis-1,4 supérieur à 90%.

Selon un autre mode de réalisation particulier et préférentiel, la composition de caoutchouc thermo-expansible comporte 50 à 100 pce d'un polybutadiène ayant un taux de liaisons cis-1,4 supérieur à 90%, ledit polybutadiène pouvant être utilisé notamment en coupage avec au plus 50 pce de caoutchouc naturel ou polyisoprène de synthèse.

Aux élastomères diéniques des bandes de roulement selon l'invention pourraient être associés, en quantité minoritaire, des élastomères synthétiques autres que diéniques, voire des polymères autres que des élastomères, par exemple des polymères thermoplastiques.

4.2. Charge

Toute charge connue pour ses capacités à renforcer une composition de caoutchouc est utilisable, par exemple une charge organique telle que du noir de carbone, ou encore une charge inorganique telle que de la silice à laquelle est associé de manière connue un agent de couplage.

Une telle charge consiste préférentiellement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

De manière préférentielle, le taux de charge renforçante totale (en particulier de la silice ou du noir de carbone ou un mélange de silice et de noir de carbone) est compris entre 50 et 150 pce. Une teneur égale ou supérieure à 50 pce est favorable à une bonne tenue mécanique ; au-delà de 150 pce, il existe un risque de rigidité excessive de la couche de caoutchouc. Pour ces raisons, le taux de charge renforçante totale est plus préférentiellement compris dans un domaine de 70 à 120 pce.

Comme noirs de carbone conviennent par exemple tous les noirs de carbone qui sont conventionnellement utilisés dans les pneumatiques (noirs dits de grade pneumatique) tels que les noirs des séries 100, 200, 300 (grades ASTM), comme par exemple les noirs N115, N134, N234, N326, N330, N339, N347, N375. Les noirs de carbone pourraient être par exemple déjà incorporés à l'élastomère diénique, notamment isoprénique, sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noir" par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, en particulier de la silice ($SiO_2$) La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$, notamment entre 60 et 300 $m^2/g$. A titres de silices précipitées hautement dispersibles (dites "HDS"), on citera par exemple les silices "Ultrasil" 7000 et "Ultrasil" 7005 de la société Evonik, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber.

Selon un autre mode de réalisation particulièrement préférentiel, on utilise comme charge majoritaire une charge inorganique renforçante, en particulier de la silice, à un taux compris dans un domaine de 70 à 120 pce, charge inorganique renforçante à laquelle peut être ajoutée avantageusement du noir de carbone à un taux minoritaire au plus égal à 15 pce, en particulier compris dans un domaine de 1 à 10 pce.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la défmition ci-après soit limitative, des silanes polysulfurés répondant à la formule générale (I) suivante:

(I) $Z - A - S_x - A - Z$ ,

dans laquelle:

- x est un entier de 2 à 8 (de préférence de 2 à 5) ;
- les symboles A, identiques ou différents, représentent un radical hydrocarboné divalent (de préférence un groupement alkylène en $C_1$-$C_{18}$ ou un groupement arylène en $C_6$-$C_{12}$, plus particulièrement un alkylène en $C_1$-$C_{10}$, notamment en $C_1$-$C_4$, en particulier le propylène) ;
- les symboles Z, identiques ou différents, répondent à l'une des trois formules ci-après:

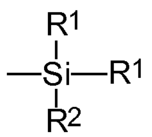 ; 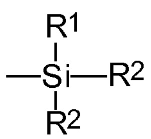 ; 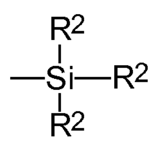 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

Dans le cas d'un mélange d'alkoxysilanes polysulfurés répondant à la formule (I) ci-dessus, notamment des

mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$.

On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane ($R^2$ = OH dans la formule I ci-dessus) tels que décrits par exemple dans les demandes de brevet WO 02/30939 (ou US 6 774 255), WO 02/31041 (ou US 2004/051210), et WO 2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080.

Bien entendu pourraient être également utilisés des mélanges des agents de couplage précédemment décrits, comme décrit notamment dans la demande WO 2006/125534 précitée.

Lorsqu'elles sont renforcées par une charge inorganique telle que silice, les compositions en caoutchouc comportent préférentiellement entre 2 et 15 pce, plus préférentiellement entre 3 et 12 pce d'agent de couplage.

### 4.3. Agent d'expansion et activateur associé

L'invention a pour caractéristique essentielle d'utiliser en combinaison, à des taux particulièrement élevés, d'une part un carbonate ou un hydrogénocarbonate de sodium ou de potassium à titre d'agent d'expansion, et d'autre part, à titre d'activateur d'expansion, un sel acide spécifique.

De manière bien connue, un agent d'expansion (« *blowing agent* » en anglais) est un composé décomposable thermiquement, destiné à libérer lors d'une activation thermique, par exemple lors de la vulcanisation du pneumatique, une quantité de gaz importante et ainsi conduire à la formation de bulles. La libération de gaz dans la composition de caoutchouc provient donc de cette décomposition thermique de l'agent d'expansion.

L'agent d'expansion utilisé conformément à la présente invention est un carbonate ou un hydrogénocarbonate (aussi appelé bicarbonate) de sodium ou de potassium. En d'autres termes, il est choisi dans le groupe constitué par le carbonate de sodium, l'hydrogéno-carbonate de sodium, le carbonate de potassium, l'hydrogénocarbonate de potassium et les mélanges de tels carbonates (y compris, bien entendu, leurs formes hydratées).

Un tel agent d'expansion a l'avantage de ne dégager que du dioxyde de carbone et de l'eau lors de sa décomposition ; il est donc particulièrement favorable à l'environnement. On utilise particulièrement l'hydrogénocarbonate de sodium ($NaHCO_3$).

Le taux de cet agent d'expansion est compris entre 5 et 25, de préférence entre 8 et 20 pce.

Une autre caractéristique essentielle de l'invention est d'ajouter à l'agent d'expansion précédemment décrit, un sel acide spécifique.

Le taux de sel acide est compris entre 2 et 20 pce, de préférence entre 2 et 15 pce. En se dispersant de manière homogène dans la composition, lors de son activation par la température, ce sel acide a pour fonction de réagir chimiquement avec l'agent d'expansion qui, lors de sa décomposition thermique, va ainsi libérer beaucoup plus de bulles de gaz ($CO_2$ et $H_2O$) que s'il était utilisé seul.

Par sel acide on entend de manière générale le produit résultant de la réaction partielle entre un polyacide (ou acide polyprotique), qu'il soit organique comme inorganique, et une base ; dans un tel acide, par conséquent et par défmition, au moins une (c'est-à-dire une ou plusieurs) fonction acide est encore présente.

Cette définition générale étant rappelée, le sel acide convenant à l'invention est :

- soit un sel acide de polyacide inorganique, l'anion du sel acide étant choisi dans le groupe constitué par les hydrogénosulfates ($HSO_4^-$), hydrogénosulfures ($HS^-$), hydrogénosulfites ($HSO_3^-$), hydrogénophosphates ($HPO_4^{2-}$) et dihydrogénophosphates ($H_2PO_4^-$), plus particulièrement constitué par les hydrogénophosphates et dihydrogénophosphates ;
- soit un sel acide de polyacide organique, l'anion du sel acide étant un monocarboxylate de diacide ou triacide

carboxylique (e.g. acides oxalique, malonique, succinique, glutarique, adipique, pimellique, subérique, azélaique, sébacique, maléique, fumarique, tartrique, malique, $\alpha$-cétoglutarique, tartrique, phtalique, isophtalique, téréphtalique et citrique), ou un dicarboxylate de triacide carboxylique (e.g. acide citrique).

De préférence, le cation du sel acide est un cation métallique, le métal de ce cation étant de préférence un métal alcalin, un métal alcalino-terreux ou un métal de transition. Plus préférentiellement, ce cation est choisi parmi lithium, sodium, potassium, magnésium, calcium, baryum, fer, manganèse, cuivre et argent, en particulier parmi lithium, sodium, potassium, magnésium et calcium, plus particulièrement encore parmi lithium, sodium et potassium.

A titre d'exemples préférentiels de sels acides de polyacide inorganique, peuvent être cités les hydrogénosulfates de sodium ($NaHSO_4$), potassium ($KHSO_4$), lithium ($LiHSO_4$) ou calcium ($Ca(HSO_4)_2$), les hydrogénosulfures de sodium (NaSH) ou potassium (KSH), les hydrogénosulfites de potassium ($KHSO_3$), sodium ($NaHSO_3$), magnésium ($Mg(HSO_3)_2$) ou calcium ($Ca(HSO_3)_2$), les hydrogénophosphates de sodium ($Na_2HPO_4$), potassium ($K_2HPO_4$), calcium ($CaHPO_4$) ou baryum ($BaHPO_4$), les dihydrogénophosphates de sodium ($NaH_2PO_4$), potassium ($KH_2PO_4$), magnésium ($Mg(H_2PO_4)_2$), calcium ($Ca(H_2PO_4)_2$) ou encore baryum ($Ba(H_2PO_4)_2$). Plus préférentiellement encore, le sel acide issu du polyacide inorganique est choisi parmi les hydrogénophosphates et dihydrogénophosphates de sodium, potassium ou calcium.

A titre d'exemples préférentiels de sel acide de polyacide organique, peuvent être cités les sels monosodiques (i.e., à un seul cation $Na^+$), disodiques (i.e., à deux cations $Na^+$), monopotassiques (i.e., à un seul cation $K^+$), dipotassiques (i.e., à deux cations $K^+$), monolithiens (i.e., à un seul cation $Li^+$) ou dilithiens (i.e., à deux cations $Li^+$) d'un diacide ou triacide carboxylique, en particulier des diacides ou triacides carboxyliques précités, notamment de l'acide citrique.

Une autre caractéristique essentielle de l'invention, pour l'obtention d'une adhérence optimisée de la bande de roulement sur glace fondante, est que la quantité totale d'agent d'expansion et de son activateur associé (sel acide) doit être supérieure à 10 pce, de préférence comprise entre 10 et 40 pce. Cette quantité totale est plus préférentiellement supérieure à 15 pce, en particulier comprise entre 15 et 40 pce.

### 4.4. Additifs divers

La composition de caoutchouc thermo-expansible peut comporter également tout ou partie des additifs usuels habituellement utilisés dans les compositions de caoutchouc pour bandes de roulement de pneumatiques, comme par exemple des agents de protection tels que cires anti-ozone, anti-ozonants chimiques, anti-oxydants, des agents plastifiants, un système de réticulation à base soit de soufre, soit de donneurs de soufre et/ou de peroxyde et/ou de bismaléimides, des accélérateurs de vulcanisation, des activateurs de vulcanisation.

Selon un mode de réalisation préférentiel, la composition de caoutchouc thermo-expansible comporte également un agent plastifiant liquide (à 20°C) dont la fonction est de ramollir la matrice en diluant l'élastomère diénique et la charge renforçante ; sa Tg (température de transition vitreuse) est par définition inférieure à -20°C, de préférence inférieure à -40°C.

Plus préférentiellement, pour une performance optimale de la bande de roulement du pneumatique de l'invention, ce plastifiant liquide est utilisé à un taux relativement réduit, tel que le rapport pondéral charge renforçante sur agent plastifiant liquide soit supérieur à 2,0, plus préférentiellement supérieur à 2,5, en particulier supérieur à 3,0.

Toute huile d'extension, qu'elle soit de nature aromatique ou non-aromatique, tout agent plastifiant liquide connu pour ses propriétés plastifiantes vis-à-vis d'élastomères diéniques, est utilisable. A température ambiante (20°C), ces plastifiants ou ces huiles, plus ou moins visqueux, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Selon un mode de réalisation particulier de l'invention, le plastifiant liquide est notamment une huile de pétrole, de préférence non aromatique. Un plastifiant liquide est qualifié de non aromatique dès lors qu'il présente une teneur en composés aromatiques polycycliques, déterminé avec l'extrait dans du DMSO selon la méthode IP 346, de moins de 3 % en poids, par rapport au poids total du plastifiant.

Conviennent particulièrement les plastifiants liquides choisis dans le groupe constitué par les huiles naphténiques (à basse ou haute viscosité, notamment hydrogénées ou non), les huiles paraffiniques, les huiles MES (*Medium Extracted Solvates*), les huiles DAE (*Distillate Aromatic Extraits*), les huiles TDAE (*Treated Distillate Aromatic Extracts*), les huiles RAE (*Residual Aromatic Extract oils*), les huiles TRAE (*Treated Residual Aromatic Extrait*), les huiles SRAE (*Safety Residual Aromatic Extrait oils*), les huiles minérales, les huiles végétales, les plastifiants éthers, les plastifiants esters, les plastifiants phosphates, les plastifiants sulfonates et les mélanges de ces composés. Selon un mode de réalisation plus préférentiel, l'agent plastifiant liquide est choisi dans le groupe constitué par les huiles MES, les huiles TDAE, les huiles naphténiques, les huiles végétales et les mélanges de ces huiles.

A titre de plastifiants phosphates par exemple, on peut citer ceux qui contiennent entre 12 et 30 atomes de carbone, par exemple le trioctyle phosphate. A titre d'exemples de plastifiants esters, on peut citer notamment les

composés choisis dans le groupe constitué par les trimellitates, les pyromellitates, les phtalates, les 1,2-cyclohexane dicarboxylates, les adipates, les azélates, les sébacates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en $C_{18}$, c'est-à-dire choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

Dans le cas où l'on souhaite augmenter la rigidité de la bande de roulement une fois expansée, sans réduire pour autant la teneur en plastifiant liquide ci-dessus, on pourra avantageusement incorporer des résines renforçantes (e.g. accepteurs et donneurs de méthylène) tels que décrites par exemple dans WO 02/10269 ou US 7,199,175.

La composition de caoutchouc thermo-expansible peut également contenir des activateurs de couplage lorsqu'un agent de couplage est utilisé, des agents de recouvrement de la charge inorganique lorsqu'une charge inorganique est utilisée, ou plus généralement des agents d'aide à la mise en oeuvre (processabilité) susceptibles de manière connue, grâce à une amélioration de la dispersion de la charge dans la matrice de caoutchouc et à un abaissement de la viscosité des compositions, d'améliorer leur processabilité à l'état cru ; ces agents sont par exemple des hydroxysilanes ou des silanes hydrolysables tels que des alkyl-alkoxysilanes, des polyols, des polyéthers, des amines, des polyorganosiloxanes hydroxylés ou hydrolysables.

4.5. Fabrication des compositions

Les compositions de caoutchouc sont fabriquées dans des mélangeurs appropriés, en utilisant par exemple deux phases de préparation successives selon une procédure générale connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, au cours de laquelle est incorporé notamment l'activateur d'expansion (sel acide), suivie d'une seconde phase de travail mécanique (parfois qualifiée de phase "productive") à basse température, typiquement inférieure à 120°C, par exemple entre 60°C et 100°C, phase de finition au cours de laquelle sont incorporés l'agent d'expansion et le système de réticulation ou vulcanisation.

Un procédé utilisable pour la fabrication de telles compositions de caoutchouc comporte par exemple et de préférence les étapes suivantes :

- incorporer dans un mélangeur, à l'élastomère ou au mélange d'élastomères, au moins la charge et le sel acide en malaxant thermomécaniquement le tout, en une ou plusieurs fois, jusqu'à atteindre une température maximale comprise entre 130°C et 200°C ;
- refroidir l'ensemble à une température inférieure à 100°C ;
- puis incorporer l'agent d'expansion (carbonate ou hydrogénocarbonate de Na ou K) au mélange ainsi obtenu et refroidi, en malaxant thermo mécaniquement le tout jusqu'à atteindre une température maximale inférieure à 100 C ;
- incorporer ensuite un système de réticulation ;
- malaxer le tout jusqu'à une température maximale inférieure à 120°C ;
- extruder ou calandrer la composition de caoutchouc ainsi obtenue.

A titre d'exemple, on introduit au cours de la première phase non-productive, dans un mélangeur approprié tel qu'un mélangeur interne usuel, tous les constituants nécessaires, les éventuels agents de recouvrement ou de mise en oeuvre complémentaires et autres additifs divers, à l'exception de l'agent d'expansion et du système de réticulation. Après travail thermomécanique, tombée et refroidissement du mélange ainsi obtenu, on incorpore alors, de préférence dans cet ordre, l'agent d'expansion, puis le retardateur de vulcanisation (si un tel composé est utilisé), enfin le reste du système de vulcanisation (e.g. soufre et accélérateur) à basse température, généralement dans un mélangeur externe tel qu'un mélangeur à cylindres ; le tout est alors mélangé (phase productive) pendant quelques minutes, par exemple entre 5 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productive et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 5 pce, celui de l'accélérateur primaire est de préférence compris entre 0,5 et 8 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

Le sel acide ayant comme effet possible celui de réduire le délai d'induction (c'est-à-dire le temps nécessaire au début de la réaction de vulcanisation) lors de la cuisson de la composition, on pourra utiliser avantageusement un retardateur de vulcanisation permettant de contrecarrer ce phénomène, et d'offrir ainsi à la composition de caoutchouc le temps nécessaire pour une expansion complète avant sa vulcanisation.

Le taux de ce retardateur de vulcanisation est de préférence compris entre 0,5 et 10 pce, plus préférentiellement entre 1 et 5 pce, en particulier entre 1 et 3 pce.

Les retardateurs de vulcanisation sont bien connus de l'homme du métier. On peut citer par exemple le N-cyclohexylthiophtalimide commercialisé sous la dénomination « Vulkalent G » par la société Lanxess, le N-(trichlorométhylthio)benzène-sulfonamide commercialisé sous dénomination « Vulkalent E/C » par Lanxess, ou encore l'anhydride phtalique commercialisé sous dénomination « Vulkalent B/C » par Lanxess. De manière préférentielle, on utilise le N-cyclohexylthiophtalimide (en abrégé « CTP »).

La composition fmale ainsi obtenue est ensuite calandrée par exemple sous la forme d'une feuille ou d'une plaque, notamment pour une caractérisation au laboratoire, ou encore calandrée ou extrudée sous la forme d'une bande de roulement thermo-expansible.

A l'état cru (i.e., non vulcanisé) et donc non expansé, la densité ou masse volumique notée $D_1$ de la composition de caoutchouc thermo-expansible est de préférence comprise entre 1,100 et 1,400 g/cm$^3$, plus préférentiellement comprise dans un domaine de 1,150 à 1,350 g/cm$^3$.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

C'est au cours de cette étape de vulcanisation que l'agent d'expansion va libérer une quantité de gaz importante, conduire à la formation de bulles dans la composition de caoutchouc mousse et finalement à son expansion.

A l'état cuit (i.e., vulcanisé), la densité notée $D_2$ de la composition de caoutchouc une fois expansée (i.e., à l'état de caoutchouc mousse) est comprise de préférence entre 0,700 à 1,000 g/cm$^3$, plus préférentiellement comprise dans un domaine de 0,750 à 0,950 g/cm$^3$.

Son taux d'expansion volumique noté $T_E$ (exprimé en %) est de préférence compris entre 20% et 75%, plus préférentiellement dans un domaine de 25 à 60%, ce taux d'expansion $T_E$ étant calculé de manière connue à partir des densités $D_1$ et $D_2$ ci-dessus, comme suit :

$$T_E = [(D_1/D_2) - 1] \times 100.$$

La composition de caoutchouc ainsi formulée, à base de taux élevés d'un agent d'expansion et d'un activateur spécifiques combinés, permet d'améliorer fortement l'adhérence sur glace fondante des bandes de roulement de pneumatiques, comme en attestent les exemples de réalisation qui suivent.

## 5. EXEMPLES DE REALISATION DE L'INVENTION

La composition de caoutchouc thermo-expansible précédemment décrite est avantageusement utilisable dans les bandes de roulement de pneumatiques hiver pour tout type de véhicule, en particulier dans les pneumatiques pour véhicules tourisme, comme démontré dans les essais qui suivent.

Pour les besoins de ces essais, deux compositions de caoutchouc (notées C-0 et C-1) ont été préparées dont la formulation est donnée dans le tableau 1 (taux des différents produits exprimé en pce). La composition C-0 est la composition témoin ; la composition C-1 est celle conforme à l'invention, elle comporte en plus l'agent d'expansion (hydrogénocarbonate de sodium) et son sel acide spécifique associé.

Pour la fabrication de ces compositions, on a procédé de la manière suivante: on a introduit dans un mélangeur interne, dont la température initiale de cuve était d'environ 60°C, successivement la charge renforçante, l'élastomère diénique (coupage NR et BR), le sel acide pour la composition C-1, ainsi que les divers autres ingrédients à l'exception du système de vulcanisation et de l'agent d'expansion ; le mélangeur était ainsi rempli à environ 70% (% en volume). On a conduit alors un travail thermomécanique (phase non-productive) en une étape d'environ 2 à 4 min, jusqu'à atteindre

une température maximale de "tombée" d'environ 150°C. On a récupéré le mélange ainsi obtenu, on l'a refroidi à 50°C environ puis on a incorporé l'agent d'expansion (hydrogénocarbonate de Na), le retardateur de vulcanisation (CTP), ensuite l'accélérateur sulfénamide et le soufre sur un mélangeur externe (homo-finisseur) à 30°C, en mélangeant le tout (phase productive) pendant quelques minutes.

Les compositions C-0 et C-1 ainsi préparées, utilisables directement comme bandes de roulement de pneus tourisme hiver, ont été ensuite vulcanisées sous presse, et leurs propriétés mesurées avant et après cuisson (voir tableau 2 annexé): la composition de caoutchouc selon l'invention présente après cuisson, une fois à l'état de caoutchouc mousse (i.e., expansée), une densité nettement réduite correspondant à un taux d'expansion volumique particulièrement élevé, d'environ 22%.

Ces deux compositions ont été ensuite soumises à un test laboratoire consistant à mesurer leur coefficient de friction sur glace.

Le principe repose sur un patin de composition de caoutchouc glissant à une vitesse donnée (par exemple égale à 5 km/h) sur une piste de glace (température de la glace fixée à -2 C) avec une charge imposée (par exemple égale à 3 kg/cm$^2$). On mesure les forces générées dans le sens de l'avancement (Fx) du patin et perpendiculaire à l'avancement (Fz) ; le rapport Fx/Fz détermine le coefficient de friction de l'éprouvette sur la glace.

Le principe de ce test est bien connu de l'homme du métier (voir par exemple demandes de brevet EP 1052270, EP 1505112 et WO 2010/009850). Il permet d'évaluer, dans des conditions représentatives, l'adhérence sur glace fondante qui serait obtenue lors d'un essai de roulage sur un véhicule équipé de pneumatiques dont la bande de roulement est constituée des mêmes compositions de caoutchouc.

Les résultats sont exprimés dans le tableau 3, une valeur supérieure à celle de la composition témoin (C-0), arbitrairement fixée à 100, indiquant un résultat amélioré c'est-à-dire une aptitude à une distance de freinage plus courte.

Ces résultats du tableau 3 démontrent bien, pour la composition C-1 selon l'invention comparée à la composition témoin C-0, une augmentation particulièrement notable du coefficient de friction à l'état partiellement usé (volontairement érodé de manière à retirer 1 mm d'épaisseur), et donc une amélioration d'adhérence sur glace, ceci grâce à l'utilisation combinée de l'agent d'expansion et de son acide associés, aux taux élevés préconisés.

**Tableau 1**

| Composition N°: | C-0 | C-1 |
|---|---|---|
| BR (1) | 60 | 60 |
| NR (2) | 40 | 40 |
| silice (3) | 80 | 80 |
| agent de couplage (4) | 6 | 6 |
| noir de carbone (5) | 5 | 5 |
| agent d'expansion (6) | - | 7.5 |
| sel acide (7) | - | 11.5 |
| plastifiant liquide (8) | 25 | 25 |
| résine plastifiante (9) | 15 | 15 |
| DPG | 2 | 2 |
| ZnO | 1.5 | 1.5 |
| acide stéarique | 1 | 1 |
| cire anti-ozone | 1.5 | 1.5 |
| antioxydant (10) | 1.5 | 1.5 |
| soufre | 2 | 2 |
| accélérateur (11) | 2.2 | 2.2 |

(suite)

| Composition N°: | C-0 | C-1 |
|---|---|---|
| retardateur (12) | 2.2 | 2.2 |

(1) BR avec 4,3% de 1-2 ; 2,7% de trans ; 93% de cis 1-4 (Tg = -104°C) ;
(2) caoutchouc naturel (peptisé) ;
(3) silice « Ultrasil 7000 » de la société Degussa, type "HDS" (BET et CTAB : environ 160 $m^2/g$);
(4) agent de couplage TESPT (« Si69 » de la société Degussa) ;
(5) grade ASTM N234 (société Cabot) ;
(6) hydrogénocarbonate de sodium (« Cellmic 266 » ; Sankyo Kasei) ;
(7) hydrogénosulfate de sodium (monohydraté ; Kanto Kagaku) ;
(8) huile MES (« Catenex SNR » de la société Shell) ;
(9) résine C5/C9 (« Escorez ECR-373 » de la société Exxon) ;
(10) N-1,3-diméthylbutyl-N-phénylparaphénylènediamine (« Santoflex 6-PPD » de la société Flexsys);
(11) N-dicyclohexyl-2-benzothiazol-sulfénamide (« Santocure CBS » de la société Flexsys) ;
(12) CTP (N-cyclohexylthiophtalimide ; « Vulkalent G » de la société Lanxess).

**Tableau 2**

| Composition testée : | C-0 | C-1 |
|---|---|---|
| Densité avant cuisson | 1.16 | 1.20 |
| Densité après cuisson | 1.17 | 0.82 |
| Taux d'expansion volumique (%) | 0 | 22 |

**Tableau 3**

| Composition testée : | C-0 | C-1 |
|---|---|---|
| Friction sur glace (-2°C) | 100 | 124 |

## Revendications

**1.** Pneumatique dont la bande de roulement comporte, à l'état non vulcanisé, une composition de caoutchouc thermo-expansible comportant au moins un élastomère diénique, plus de 50 pce d'une charge renforçante, entre 5 et 25 pce d'un carbonate ou hydrogéno-carbonate de sodium ou potassium et entre 2 et 20 pce d'un sel acide, la teneur totale en (hydrogéno)carbonate et sel acide étant supérieure à 10 pce, le sel acide étant :

- soit un sel acide de polyacide inorganique, l'anion du sel acide étant choisi dans le groupe constitué par les hydrogénosulfates, hydrogénosulfures, hydrogénosulfites, hydrogénophosphates et dihydrogénophosphates ;
- soit un sel acide de polyacide organique, l'anion du sel acide étant un monocarboxylate de diacide ou triacide carboxylique, ou un dicarboxylate de triacide carboxylique.

**2.** Pneumatique selon la revendication 1, dans lequel l'élastomère diénique est choisi dans le groupe constitué par le caoutchouc naturel, les polyisoprènes de synthèse, les polybutadiènes, les copolymères de butadiène, les copolymères d'isoprène et les mélanges de ces élastomères.

**3.** Pneumatique selon la revendication 2, dans lequel ladite composition de caoutchouc comporte 50 à 100 pce de caoutchouc naturel ou de polyisoprène de synthèse, de préférence utilisé en coupage avec au plus 50 pce d'un polybutadiène ayant un taux de liaisons cis-1,4 supérieur à 90%.

**4.** Pneumatique selon la revendication 2, dans lequel ladite composition comporte 50 à 100 pce d'un polybutadiène ayant un taux de liaisons cis-1,4 supérieur à 90%, de préférence utilisé en coupage avec au plus 50 pce de caoutchouc naturel ou un polyisoprène de synthèse.

5. Pneumatique selon l'une quelconque des revendications 1 à 4, dans lequel le taux de charge renforçante est compris entre 50 et 150 pce, de préférence compris dans un domaine de 70 à 120 pce.

6. Pneumatique selon l'une quelconque des revendications 1 à 5, dans lequel la composition de caoutchouc comporte en outre un agent plastifiant liquide à 20°C, à un taux tel que le rapport pondéral charge renforçante sur agent plastifiant liquide est supérieur à 2,0, de préférence supérieur à 2,5.

7. Pneumatique selon l'une quelconque des revendications 1 à 6, dans lequel le taux de carbonate ou hydrogénocarbonate est compris entre 8 et 20 pce.

8. Pneumatique selon l'une quelconque des revendications 1 à 7, dans lequel le taux de sel acide est compris entre 2 et 15 pce.

9. Pneumatique selon l'une quelconque des revendications 1 à 8, dans lequel la teneur totale en (hydrogéno)carbonate et en sel acide est supérieure à 15 pce, de préférence comprise entre 15 et 40 pce.

10. Pneumatique selon l'une quelconque des revendications 1 à 9, dans lequel le cation du sel acide est un cation métallique.

11. Pneumatique selon la revendication 10, dans lequel le métal du cation métallique est un métal alcalin, un métal alcalino-terreux ou un métal de transition.

12. Pneumatique selon la revendication 11, dans lequel le métal du cation métallique est choisi parmi lithium, sodium, potassium, magnésium et calcium, de préférence parmi lithium, sodium et potassium.

13. Pneumatique selon la revendication 12, dans lequel le sel acide est choisi parmi les hydrogénophosphates et dihydrogénophosphates de sodium, potassium ou calcium.

14. Pneumatique selon la revendication 12, dans lequel le sel acide est choisi parmi les sels monosodiques, disodiques, monopotassiques, dipotassiques, monolithiens, dilithiens de l'acide citrique.

15. Pneumatique selon l'une quelconque des revendications 1 à 14, dans lequel la composition de caoutchouc comporte en outre un retardateur de vulcanisation, de préférence à un taux compris entre 0,5 et 10 pce.

## Patentansprüche

1. Reifen, dessen Lauffläche in unvulkanisiertem Zustand eine wärmeexpandierbare Kautschukzusammensetzung umfasst, die mindestens ein Dienelastomer, mehr als 50 phe eines verstärkenden Füllstoffs, zwischen 5 und 25 phe eines Natrium- oder Kaliumcarbonats oder -hydrogencarbonats, und zwischen 2 und 20 phe eines sauren Salzes umfasst, wobei der Gesamtgehalt an (Hydrogen)Carbonat und saurem Salz über 10 phe liegt, wobei es sich bei dem Salz:

   - entweder um ein saures Salz einer anorganischen Polysäure, wobei das Anion des sauren Salzes aus der Gruppe bestehend aus den Hydrogensulfaten, Hydrogensulfiden, Hydrogensulfiten, Hydrogenphosphaten und Dihydrogenphosphaten ausgewählt ist;
   - oder um ein saures Salz einer organischen Polysäure, wobei das Anion des sauren Salzes ein Monocarboxylat einer Carbondi- oder -trisäure oder ein Dicarboxylat einer Carbontrisäure ist, handelt.

2. Reifen nach Anspruch 1, wobei das Dienelastomer aus der Gruppe bestehend aus Naturkautschuk, synthetischen Polyisoprenen, Polybutadienen, Butadien-Copolymeren, Isopren-Copolymeren und Mischungen dieser Elastomere ausgewählt ist.

3. Reifen nach Anspruch 2, wobei die Kautschukzusammensetzung 50 bis 100 phe Naturkautschuk oder synthetisches Polyisopren, vorzugsweise als Verschnitt mit höchstens 50 phe eines Polybutadiens mit einem Gehalt an cis-1,4-Bindungen von mehr als 90% eingesetzt, umfasst.

4. Reifen nach Anspruch 2, wobei die Zusammensetzung 50 bis 100 phe eines Polybutadiens mit einem Gehalt an

cis-1,4-Bindungen von mehr als 90%, vorzugsweise als Verschnitt mit höchstens 50 phe Naturkautschuk oder synthetischem Polyisopren eingesetzt, umfasst.

5. Reifen nach einem der Ansprüche 1 bis 4, wobei der Gehalt an verstärkendem Füllstoff zwischen 50 und 150 phe und vorzugsweise im Bereich von 70 bis 120 phe liegt.

6. Reifen nach einem der Ansprüche 1 bis 5, wobei die Kautschukzusammensetzung außerdem einen bei 20°C flüssigen Weichmacher in einem solchen Gehalt, dass das Gewichtsverhältnis von verstärkendem Füllstoff zu flüssigem Weichmacher größer als 2,0 und vorzugsweise größer als 2,5 ist, umfasst.

7. Reifen nach einem der Ansprüche 1 bis 6, wobei der Gehalt an Carbonat oder Hydrogencarbonat zwischen 8 und 20 phe liegt.

8. Reifen nach einem der Ansprüche 1 bis 7, wobei der Gehalt an saurem Salz zwischen 2 und 15 phe liegt.

9. Reifen nach einem der Ansprüche 1 bis 8, wobei der Gesamtgehalt an (Hydrogen)Carbonat und saurem Salz über 15 phe und vorzugsweise zwischen 15 und 40 phe liegt.

10. Reifen nach einem der Ansprüche 1 bis 9, wobei es sich bei dem Kation des sauren Salzes um ein Metallkation handelt.

11. Reifen nach Anspruch 10, wobei es sich bei dem Metall des Metallkations um ein Alkalimetall, ein Erdalkalimetall oder ein Übergangsmetall handelt.

12. Reifen nach Anspruch 11, wobei das Metall des Metallkations aus Lithium, Natrium, Kalium, Magnesium und Calcium, vorzugsweise aus Lithium, Natrium und Kalium, ausgewählt ist.

13. Reifen nach Anspruch 12, wobei das saure Salz aus Natrium-, Kalium- oder Calciumhydrogenphosphat und -dihydrogenphosphat ausgewählt ist.

14. Reifen nach Anspruch 12, wobei das saure Salz aus den Mononatrium-, Dinatrium-, Monokalium-, Dikalium-, Monolithium-, Dilithiumsalzen der Citronensäure ausgewählt ist.

15. Reifen nach einem der Ansprüche 1 bis 14, wobei die Kautschukzusammensetzung außerdem einen Vulkanisationsverzögerer umfasst, vorzugsweise in einer Menge zwischen 0,5 und 10 phe.

## Claims

1. Tyre, the tread of which comprises, in the unvulcanized state, a heat-expandable rubber composition comprising at least a diene elastomer, more than 50 phr of a reinforcing filler, between 5 and 25 phr of a sodium or potassium carbonate or hydrogen carbonate and between 2 and 20 phr of an acid salt, the total content of (hydrogen) carbonate and acid salt being greater than 10 phr, the acid salt being:

   - either an acid salt of an inorganic polyacid, the anion of the acid salt being selected from the group consisting of hydrogen sulphates, hydrogen sulphides, hydrogen sulphites, hydrogen phosphates and dihydrogen phosphates;
   - or an acid salt of an organic polyacid, the anion of the acid salt being a monocarboxylate of a dicarboxylic or tricarboxylic acid, or a dicarboxylate of a tricarboxylic acid.

2. Tyre according to Claim 1, in which the diene elastomer is selected from the group consisting of natural rubber, synthetic polyisoprenes, polybutadienes, butadiene copolymers, isoprene copolymers and the mixtures of these elastomers.

3. Tyre according to Claim 2, in which the said rubber composition comprises from 50 to 100 phr of natural rubber or of synthetic polyisoprene, preferably used as a blend with at most 50 phr of a polybutadiene having a content of cis-1,4- bonds of greater than 90%.

4. Tyre according to Claim 2, in which said composition comprises from 50 to 100 phr of a polybutadiene having a content of cis-1,4- bonds of greater than 90%, preferably used as a blend with at most 50 phr of natural rubber or a synthetic polyisoprene.

5. Tyre according to any one of Claims 1 to 4, in which the content of reinforcing filler is between 50 and 150 phr, preferably within a range from 70 to 120 phr.

6. Tyre according to any one of Claims 1 to 5, in which the rubber composition further comprises a plasticizing agent that is liquid at 20°C, at a content such that the weight ratio of reinforcing filler to liquid plasticizing agent is greater than 2.0, preferably greater than 2.5.

7. Tyre according to any one of Claims 1 to 6, in which the content of carbonate or hydrogen carbonate is between 8 and 20 phr.

8. Tyre according to any one of Claims 1 to 7, in which the content of acid salt is between 2 and 15 phr.

9. Tyre according to any one of Claims 1 to 8, in which the total content of (hydrogen) carbonate and acid salt is greater than 15 phr, preferably between 15 and 40 phr.

10. Tyre according to any one of Claims 1 to 9, in which the cation of the acid salt is a metallic cation.

11. Tyre according to Claim 10, in which the metal of the metallic cation is an alkali metal, an alkaline-earth metal or a transition metal.

12. Tyre according to Claim 11, in which the metal of the metallic cation is selected from lithium, sodium, potassium, magnesium and calcium, preferably from lithium, sodium and potassium.

13. Tyre according to Claim 12, in which the acid salt is selected from sodium, potassium or calcium hydrogen phosphates and dihydrogen phosphates.

14. Tyre according to Claim 12, in which the acid salt is selected from the monosodium, disodium, monopotassium, dipotassium, monolithium and dilithium salts of citric acid.

15. Tyre according to any one of Claims 1 to 14, in which the rubber composition further comprises a vulcanization retarder, preferably at a content of between 0.5 and 10 phr.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 3878147 A
- JP 3159803 A
- JP 2002211203 A
- EP 940435 A
- WO 2008080750 A
- WO 2008080751 A
- WO 2009083125 A
- WO 2009112220 A
- JP 2003183434 A
- JP 2004091747 A
- JP 2006299031 A
- JP 2007039499 A
- JP 2007314683 A
- JP 2008001826 A
- JP 2008150413 A
- EP 826522 A
- US 5147477 A
- US 6336487 B
- US 6013718 A
- US 5977238 A
- US 6815473 B
- US 20060089445 A
- US 6503973 B
- WO 9736724 A
- WO 9916600 A
- WO 2006069792 A
- WO 2006069793 A
- WO 2008003434 A
- WO 2008003435 A
- WO 03002648 A
- US 2005016651 A
- WO 03002649 A
- US 2005016650 A
- WO 02083782 A
- US 7217751 B
- WO 0230939 A
- US 6774255 B
- WO 0231041 A
- US 2004051210 A
- WO 2007061550 A
- WO 2006125532 A
- WO 2006125533 A
- WO 2006125534 A
- US 6849754 B
- WO 9909036 A
- WO 2006023815 A
- WO 2007098080 A
- WO 02088238 A
- WO 0210269 A
- US 7199175 B
- EP 1052270 A
- EP 1505112 A
- WO 2010009850 A